# EUROPÄISCHE PATENTSCHRIFT

(11) **EP 4 300 898 B1**
(45) Veröffentlichungstag und Bekanntmachung des Hinweises auf die Patenterteilung: **03.09.2025**
(21) Anmeldenummer: 23208642.1
(22) Anmeldetag: 08.11.2023
(51) Int. Cl.: H04L 12/40, F04D 25/06, F04D 19/04

(54) **VAKUUMGERÄT**
VACUUM MACHINE
MACHINE À VIDE

(43) Veröffentlichungstag der Anmeldung: 03.01.2024
(73) Patentinhaber: Pfeiffer Vacuum Technology AG, 35614 Asslar (DE)
(72) Erfinder: Böttcher, Jochen, 35394 Gießen (DE)
(74) Vertreter: Manitz Finsterwald Patent- und Rechtsanwaltspartnerschaft mbB

(56) Entgegenhaltungen:
- DE-A1- 102017 208 824
- US-A- 4 918 930

## Beschreibung

Die Erfindung betrifft ein Vakuumgerät mit mehreren Modulen, von denen jedes eine Funktionseinheit zum Ausführen einer vorgegebenen Funktion und zumindest eine Kommunikationseinheit zum Empfangen eines Eingangsdatensatzes für die Funktionseinheit umfasst.

Vakuumgeräte, die einen vergleichsweise komplexen Aufbau aufweisen und beispielsweise Vakuumpumpen, Pumpstände, Massenspektrometer oder Lecksucher umfassen, weisen üblicherweise mehrere interne elektronische Module auf, die kommunikativ miteinander in Verbindung stehen. Die kommunikativen Verbindungen zwischen den Modulen solcher Vakuumgeräte sind häufig als CAN-Verbindungen ausgebildet (CAN von engl. Controller Area Network), da solche CAN-Verbindungen relativ schnell, betriebssicher und in kommerziell erhältlichen Mikrocontrollern verfügbar sind.

Bei den CAN-Verbindungen zwischen den mehreren Modulen eines Vakuumgeräts ist es häufig erforderlich, mehrere voneinander getrennte Potentialregionen oder Spannungsbereiche vorzusehen, da eine Trennung zwischen den Modulen aufgrund möglicher Störungen beispielsweise bei empfindlichen analogen Messungen oder aufgrund berührungsgefährlicher und nicht berührungsgefährlicher Spannungen notwendig ist. Für jede Potentialregion bzw. für jeden Spannungsbereich ist ein eigener CAN-Bus notwendig, da eine Trennung zwischen den Potentialregionen bzw. Spannungsbereichen nur zwischen einem CAN-Controller eines Moduls des Vakuumgeräts und einem CAN-Treiber erfolgen kann, aber nicht ohne Weiteres auf einem bestimmten CAN-Potential möglich ist.

Wenn jeder dieser CAN-Busse beispielsweise mit einem zentralen Modul bzw. einer zentralen Logikeinheit in Verbindung steht, mit der die Module des Vakuumgeräts gesteuert und dabei aufeinander abgestimmt werden, sind normalerweise relativ viele Verbindungen an der zentralen Logikeinheit erforderlich, da jede Potentialregion bzw. jeder entsprechende CAN-Bus eine eigene Verbindung mit der zentralen Logikeinheit erfordert. Dies führt zu großen und teuren Verbindungen an einer solchen zentralen Logikeinheit, welche eine große Anzahl notwendiger Pins auf Steckverbindern und eine große Anzahl von Kabeln erfordern.

Ferner kann es notwendig sein, auf einer Verbindung, die beispielsweise als Steckverbinder ausgebildet ist, verschiedene Potentialregionen zu führen. Dies bedingt wiederum die Einhaltung physikalisch notwendiger Abstände bei einer solchen Verbindung bzw. auf einem entsprechenden Steckverbinder, was wiederum die Verbindung bzw. den Steckverbinder größer, teurer und aufwändiger machen kann. Es kann sogar möglich sein, dass keine kommerziell verfügbare Lösung für eine solche Verbindung bzw. einen solchen Steckverbinder vorhanden ist.

Darüber hinaus besteht bei der Verwendung mehrerer CAN-Busse, die lediglich mit einer zentralen Logikeinheit verbunden sind, häufig keine durchgängige Kommunikation bzw. logische Verbindung zwischen bestimmten Modulen des Vakuumgeräts. Mit anderen Worten bestehen eine solche logische Verbindungen bzw. Kommunikationen meist nur zwischen solchen Modulen, die dem gleichen CAN-Bus zugeordnet sind, aber nicht zwischen Modulen, die sich auf verschiedenen CAN-Bussen befinden.

In der US 4 918 930 A ist ein Vakuumgerät mit einer Kryopumpe, mehreren zusätzlichen Pumpen sowie weiteren Modulen beschrieben, die elektronisch miteinander verbunden sind. Die Module weisen eine lineare Topologie gemäß einer Daisy-Chain-Fashion auf, eine Topologie mit einer Serien- oder Reihenschaltung von Hardwarekomponenten mittels eines Bussystems.

Die DE 10 2017 208 824 A1 beschreibt eine Vorrichtung zur Kopplung eines Feldbusses mit einem Lokalbus, der eine Daisy-chain-Topologie aufweist. Die Vorrichtung umfasst eine Verarbeitungseinrichtung, die dafür vorgesehen ist, Datensätze an einen Sensor bzw. Aktor als Funktionseinheit zu übertragen und von diesem zu empfangen. Außerdem kommuniziert die Verarbeitungseinheit über Schnittstellen mit jeweiligen anderen Modulen.

Eine Aufgabe der Erfindung besteht darin, ein Vakuumgerät zu schaffen, dessen Module möglichst einfache und kostengünstige Verbindungen aufweisen und bei dem eine durchgängige logische Kommunikation zwischen allen Modulen bereitgestellt wird.

Diese Aufgabe wird durch ein Vakuumgerät mit den Merkmalen des Anspruchs 1 gelöst. Vorteilhafte Weiterbildungen der Erfindung sind in den Unteransprüchen, der Beschreibung und den Zeichnungen angegeben.

Das Vakuumgerät weist mehrere Module auf, und jedes der Module umfasst eine Funktionseinheit, die eine vorgegebene Funktion während des Betriebs des Vakuumgeräts ausführt, sowie zumindest eine Kommunikationseinheit, die ausgebildet ist, um einen Eingangsdatensatz von einem anderen Modul zu empfangen und an die Funktionseinheit zu übertragen sowie einen Ausgangsdatensatz von der Funktionseinheit zu empfangen und an ein anderes Modul zu übertragen.

Mindestens eines der Module des Vakuumgeräts weist zwei Kommunikationseinheiten auf. Beide dieser zwei Kommunikationseinheiten sind ausgebildet, um den Eingangsdatensatz an die jeweils andere Kommunikationseinheit desselben Moduls zu übertragen. Mit anderen Worten sind die Kommunikationseinheiten eines Moduls des Vakuumgeräts dann, wenn dieses Modul zwei oder mehr Kommunikationseinheiten aufweist, jeweils in der Lage bzw. dafür ausgebildet, den Eingangsdatensatz an das jeweils andere bzw. die mehreren anderen Kommunikationseinheiten desselben Moduls zu übertragen.

Ein solches Vakuumgerät kann beispielsweise als Vakuumpumpe, als vollständiger Pumpstand einschließlich einer oder mehrerer Vakuumpumpen und eines Rezipienten, als Massenspektrometer oder als Lecksucher ausgebildet sein. Jedes der Module eines solchen Vakuumgeräts kann somit entsprechend dem jeweiligen Verwendungszweck des Vakuumgeräts eine bestimmte Funktion oder Applikation ausführen. Bei dem Modul, von dem der Eingangsdatensatz empfangen wird, kann es sich beispielsweise um eine zentrale Logikeinheit des Vakuumgeräts handeln. Der Eingangsdatensatz kann zum Steuern der Funktionseinheit vorgesehen sein, damit die Funktionseinheit die vorgegebene bzw. gewünschte Funktion während des Betriebs des Vakuumgeräts ausführen kann.

Da die Kommunikationseinheiten des mindestens einen der Module mit zwei Kommunikationseinheiten den Eingangsdatensatz an die jeweils andere Kommunikationseinheit des Moduls übertragen können, wird eine durchgängige logische Kommunikation über dieses Modul und die weiteren Module ermöglicht. Das Modul mit zwei Kommunikationseinheiten weist somit eine Gateway-Funktion auf, die eine einfache Verkettung der Module des Vakuumgeräts über deren Kommunikationseinheiten ermöglicht. Die Verbindungen der Module können daher eine einfache Topologie aufweisen, die mit geringen Kosten verbunden ist.

Dies ermöglicht ferner eine klare Struktur für einen Bus, beispielsweise einen CAN-Bus (CAN von engl. Controller Area Network), mit welchem die jeweilige Verbindung zwischen den Modulen hergestellt wird. Außerdem kann durch die Gateway-Funktion des einen oder der mehreren Module mit zwei Kommunikationseinheiten eine durchgängige logische Kommunikation aller Module erzeugt werden. Dadurch kann sichergestellt werden, dass der Eingangsdatensatz für weitere oder sogar alle Module des Vakuumgeräts sichtbar bzw. verfügbar ist. Mit anderen Worten kann eine durchgängige logische Kommunikation bezüglich des Eingangsdatensatzes zwischen den Modulen des Vakuumgeräts erreicht werden, die wiederum die Verwaltung sämtlicher Module, beispielsweise durch eine zentrale Logikeinheit, vereinfachen kann.

Darüber hinaus ermöglicht die Gateway-Funktion bzw. die Verbindung zwischen den Kommunikationseinheiten eines Moduls eine solche Verbindungstruktur zwischen den Modulen, bei der nur ein einziger Spannungsbereich bzw. eine einzige Potentialregion zwischen den Modulen auftritt, so dass bei den jeweiligen Anschlüssen der Module keine Abstände zu anderen Potentialregionen zu berücksichtigen sind.

Zusammengefasst ermöglicht die Verbindung der zwei Kommunikationseinheiten innerhalb eines Moduls, eine transparente Busverbindung zwischen allen Modulen des Vakuumgeräts herzustellen, wodurch wiederum durchgängige Querkommunikationen zwischen Modulen und eine Synchronisation der Module ermöglicht werden. Insgesamt kann somit in dem erfindungsgemäßen Vakuumgerät eine einfache und kostengünstige Verbindung und eine durchgängige Kommunikation zwischen den mehreren Modulen erfolgen.

Jedes Modul weist höchstens eine galvanische Trennung bei der Verbindung mit anderen Modulen auf. Mit anderen Worten sind keine zwei galvanischen Trennungen an den Kommunikationseinheiten bzw. CAN-Controllern eines einzigen Moduls vorgesehen, selbst wenn dieses Modul zwei Kommunikationseinheiten bzw. CAN-Controller aufweist. Zwei galvanische Trennungen können beispielsweise an einer zentralen Logikeinheit bekannter Vakuumgeräte vorgesehen sein. Wenn hingegen lediglich eine galvanische Trennung an den jeweiligen Modulen des Vakuumgeräts vorgesehen ist, können die Anschlüsse zwischen den Kommunikationseinheiten der Module relativ einfach ausgeführt werden, wobei beispielsweise bei Steckverbindern kein Abstand eingehalten zu werden braucht, um unterschiedliche Potentialregionen an einem solchen Steckverbinder voneinander zu trennen. Bei der Verbindung zwischen jedem der Module und einem anderen Modul, d.h. bei der Verbindung zwischen zwei Kommunikationseinheiten zweier beliebiger Module, kann folglich lediglich eine Potentialregion verwendet werden. Umgekehrt ausgedrückt kann ein Übergang von beispielsweise zwei Kommunikationseinheiten eines Moduls in jeweils zwei unterschiedliche Potentialbereiche über zwei verschiedene galvanische Trennungen vermieden werden.

Gemäß einem nicht beanspruchten Beispiel kann es alternativ jedoch auch möglich sein, dass den zwei Kommunikationseinheiten eines Moduls jeweils eine galvanische Trennung bei der Verbindung mit einem jeweiligen weiteren Modul zugeordnet ist, so dass sich zwei galvanische Trennungen an einem Modul befinden können. Aufgrund der internen Verbindung der zwei Kommunikationseinheiten desselben Moduls kann dennoch eine einfache Topologie der Busstruktur erreicht werden. Beispielsweise können die Kommunikationseinheiten desselben Moduls mit voneinander verschiedenen Modulen verbunden sein, was ohnehin separate Anschlüsse erfordert. Folglich können aufwändige Anschlüsse aufgrund der einfachen Bustopologie vermieden werden, beispielsweise ohne einzuhaltende Abstände auf Steckverbindern, selbst wenn den zwei Kommunikationseinheiten jeweils eine galvanische Trennung zugeordnet ist. Wenn die Module des Vakuumgeräts beispielsweise als lineare Kette auf einem Bus angeordnet sind, können galvanische Trennungen flexibel entlang dieser Kette angeordnet werden.

Gemäß einer Ausführungsform können die Module des Vakuumgeräts linear aufeinanderfolgend auf einem logischen Bus angeordnet sein. Bei einem solchen logischen Bus kann es sich beispielsweise um einen CAN-Bus handeln. Dies kann eine klare und kostengünstige Busstruktur ermöglichen, beispielsweise mit kommerziell verfügbaren Controllern.

Gemäß einer weiteren Ausführungsform kann jedes der Module des Vakuumgeräts zwei Kommunikationseinheiten aufweisen, die jeweils mit einer Kommunikationseinheit eines anderen Moduls in Verbindung stehen. Die zwei Kommunikationseinheiten eines jeweiligen Moduls können bei dieser Ausführungsform jeweils mit voneinander verschiedenen Modulen des Vakuumgeräts in Verbindung stehen.

Wenn jedes der Module zwei Kommunikationseinheiten aufweist, kann eine Ringstruktur der Module über ihre jeweiligen Kommunikationseinheiten aufgebaut werden, bei der ausgehend von einem ersten oder zentralen Modul eine Verbindung mit einem weiteren Modul bestehen kann, das wiederum über seine zweite Kommunikationseinheit mit einem noch anderen Modul in Verbindung steht. Dies kann so lange fortgesetzt werden, bis das letzte Modul wiederum über seine zweite Kommunikationseinheit mit dem ersten oder zentralen Modul in Verbindung steht. Eine solche Ringstruktur oder Ringtopologie der Module und ihrer Verbindungen über die jeweiligen Kommunikationseinheiten kann eine redundante Verbindung zwischen den Modulen erzeugen, da jedes Modul über seine zwei Kommunikationseinheiten sozusagen über zwei Wege oder Pfade mit allen anderen Modulen in Verbindung stehen kann.

Alternativ können mindestens zwei Module des Vakuumgeräts nur eine einzige Kommunikationseinheit aufweisen. Falls genau zwei Module des Vakuumgeräts nur eine einzige Kommunikationseinheit aufweisen, beispielsweise ein erstes zentrales Modul und ein letztes Modul, kann eine einfache und kostengünstige Busstruktur für die Verbindungen zwischen den Kommunikationseinheiten in der Form einer linearen Kette hergestellt werden. Wenn mehr als zwei der Module des Vakuumgeräts nur eine einzige Kommunikationseinheit aufweisen, kann eine Baumstruktur der Module aufgebaut werden, bei der ein zentrales Modul bzw. eine zentrale Einheit und ein jeweiliges Ende bzw. letztes Modul eines Zweiges der Baumstruktur jeweils nur eine Kommunikationseinheit aufweisen. In einer solchen Baumstruktur können die Module bezüglich ihrer jeweiligen Funktionen gruppiert werden, wobei die Module eines jeweiligen Zweiges der Baumstruktur eine ähnliche Funktion oder Applikation ausführen können.

Gemäß einer weiteren Ausführungsform können die zwei Kommunikationseinheiten des mindestens einen der Module, das die zwei Kommunikationseinheiten aufweist, jeweils mit einer Kommunikationseinheit zweier voneinander verschiedener anderer Module in Verbindung stehen. Somit kann eine der zwei Kommunikationseinheiten des zumindest einen der Module mit der Kommunikationseinheit eines ersten anderen Moduls in Verbindung stehen, während die andere der zwei Kommunikationseinheiten des zumindest einen der Module mit der Kommunikationseinheit eines zweiten anderen Moduls in Verbindung stehen kann, das von dem ersten anderen Modul verschieden ist.

Die zumindest eine Kommunikationseinheit jedes der Module des Vakuumgeräts kann ferner nur mit einer einzigen Kommunikationseinheit eines anderen Moduls des Vakuumgeräts in Verbindung stehen. Da die Kommunikationseinheit jedes der Module bei dieser Ausführungsform nicht mit den Kommunikationseinheiten mehrerer Module in Verbindung steht, kann nur eine einzige Verbindung zwischen jeweils zwei Modulen des Vakuumgeräts erforderlich sein.

Dadurch kann eine verringerte Anzahl von Verbindungen zwischen den Modulen des Vakuumgeräts notwendig sein, beispielsweise im Vergleich zu solchen Vakuumgeräten, bei denen mehrere Kommunikationsbusse mit einer zentralen Logikeinheit bzw. einem zentralen Modul verbunden sind. Bei der Verbindung zweier Module kann folglich die Anzahl der notwendigen Pins beispielsweise eines Steckverbinders an einer zentralen Logikeinheit begrenzt sein, so dass die Verbindungen zwischen den Modulen auf relativ einfache Weise ausgeführt sein können und daher eine geringe Größe aufweisen können. Dadurch können insgesamt die Kosten für das Vakuumgerät verringert werden.

Gemäß einer weiteren Ausführungsform kann die Kommunikationseinheit überprüfen, ob der Eingangsdatensatz an die Funktionseinheit des jeweiligen Moduls adressiert ist, und den Eingangsdatensatz nur dann an die Funktionseinheit übertragen, wenn der Eingangsdatensatz tatsächlich an die Funktionseinheit des jeweiligen Moduls adressiert ist. Wenn dies nicht der Fall ist, kann die Kommunikationseinheit den Eingangsdatensatz beispielsweise an eine zweite Kommunikationseinheit des gleichen Moduls und über dieses an weitere Module übertragen. Es kann somit eine bedingte Weitergabe des Eingangsdatensatzes an die Funktionseinheit erfolgen, so dass diese nur dann durch den Empfang des Eingangsdatensatzes belastet wird, wenn der Eingangsdatensatz für diese Funktionseinheit vorgesehen ist.

Umgekehrt kann die Funktionseinheit ausgebildet sein, um einen Ausgangsdatensatz an alle vorhandenen Kommunikationseinheiten des Moduls zu übertragen. Da diese Kommunikationseinheiten den Ausgangsdatensatz wiederum an weitere Module übertragen können, kann der Ausgangsdatensatz für alle Module des Vakuumgeräts sichtbar bzw. verfügbar sein. Wenn das Modul zwei Kommunikationseinheiten zur Verbindung mit zwei weiteren Modulen aufweist, kann die Funktionseinheit den Ausgangsdatensatz somit an beide Kommunikationseinheiten übertragen.

Die Kommunikationseinheiten der Module des Vakuumgeräts können ferner derart miteinander verbunden sein, dass der Eingangsdatensatz und der Ausgangsdatensatz zu allen Modulen des Vakuumgeräts übertragbar sind. Dadurch kann eine durchgängige und vollständige logische Kommunikation und Transparenz zwischen den Modulen des Vakuumgeräts hergestellt werden.

Gemäß einer weiteren Ausführungsform können zumindest zwei Verbindungen zwischen den Kommunikationseinheiten der Module des Vakuumgeräts unterschiedliche Übertragungsparameter aufweisen. Die unterschiedlichen Übertragungsparameter können beispielsweise unterschiedliche Übertragungsraten und/oder unterschiedliche Buspegel für die zumindest zwei Verbindungen zwischen den Kommunikationseinheiten umfassen. Dadurch kann die jeweilige Verbindung zwischen den Kommunikationseinheiten zweier Module flexibel an die Eigenschaften der jeweiligen Module angepasst werden. Darüber hinaus können auch gänzlich unterschiedliche Medien zum Herstellen der jeweiligen Verbindung zwischen den Kommunikationseinheiten zweier Module vorgesehen sein, beispielsweise ein CAN-Bus, UART (Universal Asynchronous Receiver/Transmitter), SPI (Serial Peripheral Interface) oder Ethernet usw.

Gemäß einer weiteren Ausführungsform kann die Kommunikationseinheit als CAN-Controller ausgebildet sein. Dies kann für die Kommunikationseinheiten aller Module des Vakuumgeräts der Fall sein, d.h. für beide Kommunikationseinheiten eines jeweiligen Moduls, falls dieses zwei Kommunikationseinheiten aufweist.

Da CAN-Controller kommerziell verfügbar sind, kann die Verbindung zwischen den jeweiligen Modulen bzw. zwischen deren Kommunikationseinheiten auf kostengünstige Weise hergestellt werden. Bei der Verbindung zwischen zwei Kommunikationseinheiten kann ferner ein jeweiliger CAN-Treiber vorgesehen sein, der dem jeweiligen CAN-Controller zugeordnet ist. Ferner kann eine galvanische Trennung zwischen dem CAN-Controller und dem CAN-Treiber eines jeweiligen Moduls vorgesehen sein, um Potentialregionen bzw. Spannungsbereiche bei der Verbindung der Module des Vakuumgeräts voneinander zu trennen.

Gemäß einer weiteren Ausführungsform kann eines der Module des Vakuumgeräts als zentrale Logikeinheit ausgebildet sein, die den Eingangsdatensatz generiert. Die Kommunikationsverbindungen zwischen der zentralen Logikeinheit und den anderen Modulen können ausgebildet sein, um den Eingangsdatensatz zu allen Modulen des Vakuumgeräts zu übertragen. Der Eingangsdatensatz kann folglich für alle Module des Vakuumgeräts sichtbar bzw. verfügbar sein, so dass Transparenz bezüglich des Eingangsdatensatzes auf einem Bus erreicht wird, der die verschiedenen Module des Vakuumgeräts miteinander verbindet.

Die zentrale Logikeinheit kann ferner nur eine Anschlussverbindung zu einem weiteren Modul aufweisen. In diesem Fall kann die zentrale Logikeinheit nur eine Kommunikationseinheit bzw. einen CAN-Controller aufweisen, die bzw. der mit lediglich einem weiteren Modul in Verbindung steht. Die zentrale Logikeinheit kann daher auf einfache und kostengünstige Weise mit den weiteren Modulen des Vakuumgeräts verbunden werden, beispielsweise mit einem einzigen Steckverbinder.

Gemäß einer weiteren Ausführungsform kann ein Zubehörelement des Vakuumgeräts mit zumindest einer Kommunikationseinheit eines der Module des Vakuumgeräts verbindbar sein. Da stets jeweils nur zwei Module des Vakuumgeräts über die jeweiligen Kommunikationseinheiten miteinander in Verbindung stehen und dadurch eine durchgängige logische Kommunikation der Module des Vakuumgeräts erreicht wird, kann ein Zubehörelement auf einfache und kostengünstige Weise mit einer oder mehreren Kommunikationseinheiten der Module des Vakuumgeräts verbunden werden und die für den Betrieb des Zubehörelements erforderlichen Daten in geeigneter Weise beispielsweise von einer zentralen Logikeinheit erhalten.

Die durchgängige logische Kommunikation zwischen den Modulen des Vakuumgeräts ermöglicht darüber hinaus eine leichte Verteilbarkeit der Module, beispielsweise auf verschiedene Gehäuseabschnitte oder Gehäuse des Vakuumgeräts.

Nachfolgend wird die Erfindung beispielhaft anhand einer vorteilhaften Ausführungsform unter Bezugnahme auf die beigefügten Figuren beschrieben. Es zeigen, jeweils schematisch:
- Fig. 1: eine Darstellung von Modulen eines Vakuumgeräts gemäß dem Stand der Technik,
- Fig. 2: eine Darstellung von Modulen eines erfindungsgemäßen Vakuumgeräts und
- Fig. 3: eine detaillierte Darstellung von Einheiten eines Moduls des Vakuumgeräts und der Datenübertragung zwischen den Einheiten.

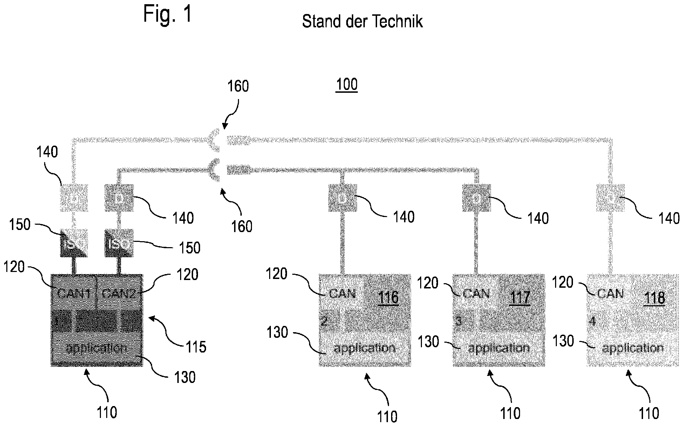

Fig. 1 zeigt schematisch ein Vakuumgerät 100 gemäß dem Stand der Technik, das mehrere Module 110 umfasst. Das Vakuumgerät 100 kann als eines der komplexeren Produkte der Vakuumtechnik ausgebildet sein, beispielsweise als Vakuumpumpe, als Vakuumpumpstand mit mehreren Vakuumpumpen, von denen eine oder mehrere mit einer Vakuumkammer verbunden sind, als Massenspektrometer oder als Lecksucher usw.

Eines der Module 110 des Vakuumgeräts 100 ist als zentrale Logikeinheit 115 ausgebildet und umfasst zwei Kommunikationseinheiten 120 in der Form zweier CAN-Controller (CAN von engl. Controller Area Network), die mit CAN1 und CAN2 bezeichnet sind. Mittels der beiden CAN-Controller 120 steuert die zentrale Logikeinheit 115 die weiteren Module 110 des Vakuumgeräts 100, die im vorliegenden Beispiel jeweils eine einzige Kommunikationseinheit 120 bzw. einen einzigen CAN-Controller 120 aufweisen. Die weiteren Module 110 des Vakuumgeräts können jedoch auch weitere Kommunikationseinheiten bzw. CAN-Controller aufweisen, die mit anderen Einheiten als der zentralen Logikeinheit 115 verbunden sein können.

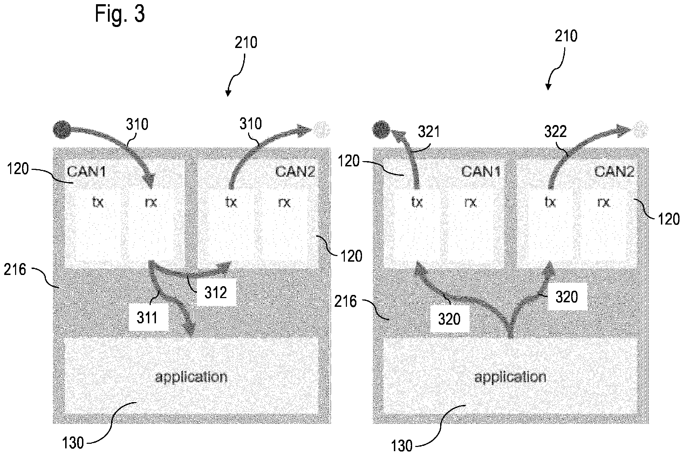

Jedes der Module 110 umfasst ferner eine Funktionseinheit 130, die eine vorgegebene Funktion bzw. Applikation während des Betriebs des Vakuumgeräts 100 ausführt. Die Funktionseinheit 130 des jeweiligen Moduls 110 ist kommunikativ mit der einen oder den beiden Kommunikationseinheiten 120 bzw. CAN-Controllern 120 kommunikativ verbunden, um einen Eingangsdatensatz 310 (vgl. Fig. 3) von der jeweiligen Kommunikationseinheit 120 zu empfangen und einen Ausgangsdatensatz 320 (vgl. Fig. 3) an die jeweilige Kommunikationseinheit 120 zu senden.

Jedem CAN-Controller 120 ist ferner ein CAN-Treiber 140 zugeordnet, um mit entsprechenden Leitungen eine CAN-Busverbindung zwischen der zentralen Logikeinheit 115 und den weiteren Modulen 110 sowie zwischen diesen weiteren Modulen 110 herzustellen.

Zwischen den Kommunikationseinheiten bzw. CAN-Controllern 120 der zentralen Logikeinheit 115 und den entsprechenden CAN-Treibern 140 ist eine jeweilige galvanische Trennung 150 vorgesehen, um das Potential der zentralen Logikeinheit 115 von dem Potential zweier weiterer Module 110, d.h. der Module 116 und 117, sowie von dem weiteren Potential des Moduls 118 zu trennen. Eine Trennung der Module auf einem bestimmten CAN-Potential ist normalerweise nicht möglich, so dass die galvanische Trennung 150 jeweils nur zwischen einem CAN-Controller 120 und einem CAN-Treiber 140 erfolgen kann. Die Trennung der verschiedenen Potentialbereiche innerhalb des Vakuumgeräts 100 ist beispielsweise erforderlich, um eine berührungsgefährliche Spannung von einer nicht berührungsgefährlichen Spannung zu trennen oder um eine Potentialtrennung zur Vermeidung von Störungen bei einer empfindlichen analogen Messung durchzuführen.

Das in Fig. 1 gezeigte Vakuumgerät 100 weist somit drei verschiedene Potentialbereiche auf, von denen sich der erste über die zentrale Logikeinheit 115 bis zu den galvanischen Trennungen 150 erstreckt, während der zweite Potentialbereich den CAN-Treiber 140, welcher der Kommunikationseinheit bzw. dem CAN-Controller CAN2 zugeordnet ist, sowie die Module 116 sowie 117 umfasst und der dritte Potentialbereich den CAN-Treiber 140, der dem CAN-Controller CAN1 der zentralen Logikeinheit 115 zugeordnet ist, und das Modul 118 umfasst. Der zweite und dritte Potentialbereich erfordert somit einen eigenen CAN-Bus.

Für die zweite und die dritte Potentialregion ist daher eine jeweilige Anschlussverbindung 160 zwischen der zentralen Logikeinheit 115 und einer jeweiligen Gruppe von Modulen 110 erforderlich, die dem gleichen Potentialbereich zugeordnet sind. Im Beispiel von Fig. 1 ist folglich eine Anschlussverbindung 160 zwischen der zentralen Logikeinheit 115 und den beiden Modulen 116, 117 von der Anschlussverbindung 160 zwischen der zentralen Logikeinheit 115 und dem weiteren Modul 181 getrennt.

Bei dem in Fig. 1 gezeigten Vakuumgerät 100 sind folglich zwei oder mehr Anschlussverbindungen 160 zwischen der zentralen Logikeinheit 115 und den weiteren Modulen 116, 117, 118 erforderlich. Allgemein erfordert jede Potentialregion der weiteren Modulen 116, 117 bzw. 118 sowie möglicher weiterer Module 110 eine separate Anschlussverbindung 160 an der zentralen Logikeinheit 115 sowie eine separate galvanische Trennung 150 und einen separaten CAN-Controller 120 der zentralen Logikeinheit 115. Wenn die Anschlussverbindungen 160 mittels eines Steckverbinders ausgeführt sind, führt dies zu einer großen Anzahl notwendiger Pins und Kabeln an einem solchen Steckverbinder der zentralen Logikeinheit 115. Die zentrale Logikeinheit 115 erfordert somit relativ große und teure Anschlussverbindungen 160 mit den weiteren Modulen 110.

Wenn die Anschlussverbindungen 160 mittels eines Steckverbinders an der zentralen Logikeinheit 115 ausgestaltet sind, müssen ferner verschiedene Potentialregionen auf einem solchen Steckverbinder geführt werden. Daher müssen auf einem solchen Steckverbinder physikalisch notwendige Abstände zur Potentialtrennung eingehalten werden. Dadurch werden die Anschlussverbindungen 160 wiederum größer, teurer und aufwändiger. Möglicherweise ist sogar keine kommerziell verfügbare Lösung für die Anschlussverbindungen 160 mittels Steckverbinder erhältlich.

Darüber hinaus besteht bei dem in Fig. 1 gezeigten Vakuumgerät 100 keine durchgängige logische Verbindung bzw. Kommunikation zwischen den Modulen 116 und 117 einerseits und dem Modul 118 andererseits, die unterschiedlichen Potentialregionen zugeordnet sind. Beispielsweise ist eine Kommunikation zwischen der zentralen Logikeinheit 115 und den beiden Modulen 116 bzw. 117 für das weitere Modul 118 nicht sichtbar bzw. zugänglich, da sich dieses in einem anderen Potentialbereich befindet und von dem weiteren CAN-Controller CAN1 gesteuert wird, der mit dem weiteren CAN-Controller CAN2 nicht in direkter Kommunikationsverbindung steht, der die anderen Module 116, 117 steuert. Dadurch ist die Verwaltung der Kommunikation zwischen den Modulen 110 des Vakuumgeräts 100 aufwändig, und gewisse Kommunikationstechniken sind ohne Weiteres nicht möglich, beispielsweise eine Kommunikation des Moduls 116 mit dem Modul 118.

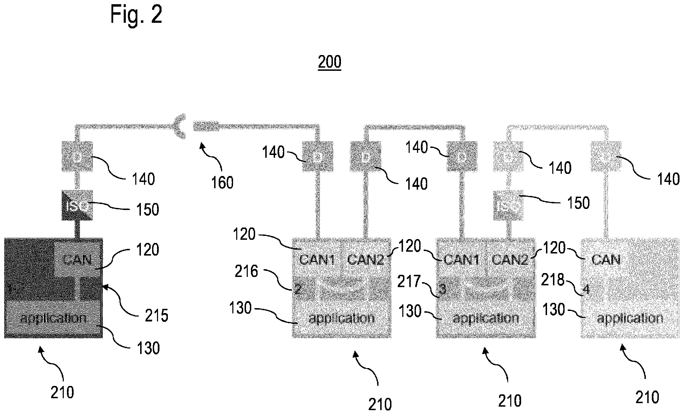

Zur Lösung der vorstehend beschriebenen Probleme ist das erfindungsgemäße Vakuumgerät 200 vorgesehen, das schematisch in Fig. 2 dargestellt ist und wiederum mehrere Module 210 umfasst. Die Elemente bzw. Einheiten des Vakuumgeräts 200, die mit den gleichen Bezugszeichen bezeichnet sind wie in Fig. 1, sind mit den vorstehend beschriebenen Einheiten und Elementen identisch oder diesen zumindest sehr ähnlich. Daher werden diese Elemente und Einheiten im Folgenden nicht erneut grundlegend beschrieben.

Das Vakuumgerät 200 unterscheidet sich von dem in Fig. 1 dargestellten Vakuumgerät 100 dadurch, dass eine zentrale Logikeinheit 215 und weitere Module 216, 217, 218 auf andere Weise ausgestaltet bzw. konfiguriert sind und dass die Verbindungen zwischen den Modulen 210 eine andere Anordnung aufweisen.

Im Einzelnen sind die jeweiligen Kommunikationseinheiten 120 der Module 210 jeweils nur mit einer einzigen Kommunikationseinheit 120 eines anderen Moduls 210 des Vakuumgeräts 200 verbunden. Im Gegensatz dazu ist bei dem Vakuumgerät 100 gemäß dem Stand der Technik die Kommunikationseinheit 120 bzw. der CAN-Controller CAN2 mit den Kommunikationseinheiten 120 der beiden Module 116, 117 verbunden.

Darüber hinaus weisen die Module 216 und 217 jeweils zwei Kommunikationseinheiten bzw. CAN-Controller 120 auf, die innerhalb des jeweiligen Moduls 216, 217 kommunikativ miteinander verbunden sind, d.h. zusätzlich zu der jeweiligen Verbindung mit der Funktionseinheit bzw. Applikation 130. Die zentrale Logikeinheit 215 weist hingegen gemäß dem vorliegenden Ausführungsbeispiel eine einzige Kommunikationseinheit bzw. einen einzigen CAN-Controller 120 auf und ist über die galvanische Trennung 150 und den CAN-Treiber 140 sowie über die Anschlussverbindung 160 mit einer der beiden Kommunikationseinheiten bzw. CAN-Controller 120 des Moduls 216 verbunden. Ferner kann die zentrale Logikeinheit 215 jedoch weitere Kommunikationseinheiten bzw. CAN-Controller aufweisen, die anderen Zwecken dienen als der Kommunikation mit den weiteren Modulen 210 und deren Funktionseinheiten bzw. Applikationen 130.

Das Modul 216 steht wiederum über seine zweite Kommunikationseinheit 120, die mit CAN2 bezeichnet ist und mit der ersten Kommunikationseinheit 120 bzw. CAN1 in Verbindung steht, mit der Kommunikationseinheit 120 des nächsten Moduls 217 in Verbindung, die wiederum mit CAN1 bezeichnet ist. Auf diese Weise besteht innerhalb des Vakuumgeräts 200 eine lineare Kommunikations- bzw. Busverbindung zwischen den einzelnen Modulen 210. Anders ausgedrückt sind die Module 210 des Vakuumgeräts 210 linear auf einem logischen CAN-Bus angeordnet.

Das letzte Modul 218 dieser Kommunikationskette weist im vorliegenden Beispiel nur eine Kommunikationseinheit bzw. einen CAN-Controller 120 auf und befindet sich in einer anderen Potentialregion als die beiden anderen Module 216, 217. Daher ist zwischen der zweiten Kommunikationseinheit 120 des Moduls 217, die mit CAN2 bezeichnet ist, und dem CAN-Treiber, der dieser Kommunikationseinheit 120 zugeordnet ist, eine galvanische Trennung 150 vorgesehen. Eine weitere galvanische Trennung 150 befindet sich an der zentralen Logikeinheit 215. Im Beispiel von Fig. 2 ist jedem der Module 210 folglich maximal eine galvanische Trennung 150 zugeordnet, d.h. eine galvanische Trennung 150 oder keine galvanische Trennung, so dass zwischen den Modulen 210 jeweils nur eine Potentialregion vorhanden ist. Wegen der linearen Struktur der Verbindungen zwischen den Modulen 210 können galvanische Trennungen 150 jedoch flexibel zwischen einem beliebigen CAN-Controller 120 und dem jeweiligen CAN-Treiber 140 angeordnet werden, der diesem zugeordnet ist, ohne dass komplizierte Anschlüsse bzw. Steckverbinder zwischen den Modulen 210 verwendet werden müssen.

Aufgrund der linearen Anordnung der Module 210 des Vakuumgeräts 200 auf einem logischen CAN-Bus mit jeweils einer Verbindung zwischen zwei verschiedenen Modulen 210 ist es möglich, die Verbindungen zwischen den Modulen 210 auf einfache und kostengünstige Weise herzustellen. Dies gilt insbesondere für die Anschlussverbindung 160 der zentralen Logikeinheit 215 mit dem ersten weiteren Modul 216. Bei der Anschlussverbindung 160 brauchen ferner keine Abstände zu anderen Potentialregionen eingehalten zu werden, wenn diese Anschlussverbindung 160 beispielsweise mittels eines Steckverbinders hergestellt wird. Ferner verringert sich die Anzahl der erforderlichen Pins bei einem solchen Steckverbinder, wodurch dessen Kosten und Größe im Vergleich zu dem Steckverbinder verringert sind, der für die Anschlussverbindungen 160 der zentralen Logikeinheit 115 des Vakuumgeräts 100 gemäß dem Stand der Technik erforderlich ist.

Die lineare und durchgängige Verbindung zwischen den Kommunikationseinheiten 120 der Module 210 des Vakuumgeräts 200 ermöglicht eine einfache Verwaltung der CAN-Busverbindung innerhalb der zentralen Logikeinheit 215. Darüber hinaus ist der gesamte Busverkehr, d.h. die innerhalb und zwischen den Modulen ausgetauschten Datensätze, für alle Module 210 transparent, d.h. sichtbar und verfügbar. Dies vereinfacht die Kommunikation zwischen den Modulen 210 und ermöglicht eine durchgängige Querkommunikation zwischen den Modulen, beispielsweise zwischen dem Modul 216 und dem Modul 218, sowie eine Synchronisation der Module 210. Ferner sind zwischen den Modulen 210 sogenannte Broadcast-Nachrichten möglich.

Fig. 3 veranschaulicht schematisch die Übertragung von Datensätzen innerhalb eines der Module 210 des erfindungsgemäßen Vakuumgeräts 200 sowie zwischen dessen Modulen 210. In Fig. 3 ist beispielhaft das erste Modul 216 des Vakuumgeräts 200 von Fig. 2 gezeigt. Ein Eingangsdatensatz 310 geht zunächst über die mit CAN1 bezeichnete Kommunikationseinheit 120 des Moduls 216 ein. Im Einzelnen wird der Eingangsdatensatz 310 mittels einer Empfangseinheit rx der Kommunikationseinheit 120 erfasst. Der Eingangsdatensatz 310 kann auch als CAN-Telegramm bezeichnet werden.

Die Kommunikationseinheit 120 prüft anschließend, ob der Eingangsdatensatz 310 für die Funktionseinheit bzw. Applikation 130 des Moduls 216 adressiert bzw. vorgesehen ist. Diese Prüfung erfolgt mittels eines CAN-Identifikators innerhalb des Eingangsdatensatzes 310. Wenn der Eingangsdatensatz 310 bzw. das CAN-Telegramm für die Funktionseinheit 130 adressiert ist, leitet die erste Kommunikationseinheit 120, die mit CAN1 bezeichnet ist, den Eingangsdatensatz 310 als Applikationsdatensatz 311 an die Funktionseinheit 130 weiter. Dieses Weiterleiten entspricht der bisherigen Vorgehensweise, die auch innerhalb des Vakuumgeräts 100 gemäß dem Stand der Technik verwendet wird.

Wenn der Eingangsdatensatz 310 jedoch nicht für die Funktionseinheit 130 des Moduls 216 adressiert ist, wird der Eingangsdatensatz 310 nicht an die Funktionseinheit 130 weitergeleitet, sondern stattdessen an die zweite Kommunikationseinheit 120 des Moduls 216, die mit CAN2 bezeichnet ist. Mit anderen Worten wird in diesem Fall der Eingangsdatensatz 310 als interner Datensatz 312 an die zweite Kommunikationseinheit 120 bzw. eine Sendeeinheit tx dieser Kommunikationseinheit 120 weitergegeben. Die Sendeeinheit tx der zweiten Kommunikationseinheit 120 gibt somit den Eingangsdatensatz 310 unverändert an das nächste Modul 217 (vgl. Fig. 2) weiter, wenn der Eingangsdatensatz 310 nicht für die Funktionseinheit bzw. Applikation 130 des Moduls 216 adressiert ist. Die Funktionseinheit bzw. Applikation 130 des Moduls 216 wird in diesem Fall nicht mit dem Eingangsdatensatz 310 belastet.

Während des Betriebs des Vakuumgeräts 200 erzeugt die Funktionseinheit bzw. Applikation 130 beispielsweise einen Ausgangsdatensatz 320, der beispielsweise zur Kommunikation oder Rückmeldung mit der zentralen Logikeinheit 215 während der Steuerung der Funktionseinheit bzw. Applikation 130 vorgesehen ist. Der Ausgangsdatensatz 320 wird bei dem erfindungsgemäßen Vakuumgerät 200 an beide Sendeeinheiten tx beider Kommunikationseinheiten bzw. CAN-Controller 120 des Moduls 216 übertragen. Die jeweiligen Sendeeinheiten tx der Kommunikationseinheiten 120 senden den Ausgangsdatensatz 320 anschließend als jeweiligen Übertragungsdatensatz 321 bzw. 322 an die anderen Module 210 weiter, d.h. im vorliegenden Fall an die zentrale Logikeinheit 215 und das weitere Modul 217.

Auf diese Weise sind sämtliche Datensätze, d.h. der Eingangsdatensatz 310 und der Ausgangsdatensatz 320, für alle Module 210 des Vakuumgeräts 200 sichtbar und verfügbar. Bei der Übertragung des Eingangsdatensatzes 310 innerhalb des Moduls 216, wie diese auf der linken Seite von Fig. 3 dargestellt ist, ergibt sich darüber hinaus lediglich eine minimale Verzögerung für die Übertragung des Datensatzes 310, wenn dieser nicht für die Funktionseinheit bzw. Applikation 130 des Moduls 216 vorgesehen ist. Diese Verzögerung weist eine zeitliche Länge etwa von der Länge des Datensatzes 310 bzw. CAN-Telegramms auf, so dass diese Verzögerung in der Praxis vernachlässigbar ist.

### Bezugszeichenliste

- 100: Vakuumgerät gemäß dem Stand der Technik
- 110: Modul
- 115: zentrale Logikeinheit
- 116, 117, 118: weitere Module
- 120: Kommunikationseinheit bzw. CAN-Controller
- 130: Funktionseinheit bzw. Applikation
- 140: CAN-Treiber
- 150: galvanische Trennung
- 160: Anschlussverbindung
- 200: erfindungsgemäßes Vakuumgerät
- 210: Modul
- 215: zentrale Logikeinheit
- 216, 217, 218: weitere Module
- 310: Eingangsdatensatz
- 311: Applikationsdatensatz
- 312: interner Datensatz
- 320: Ausgangsdatensatz
- 321, 322: Übertragungsdatensatz
- rx: Empfangseinheit
- tx: Sendeeinheit

## Patentansprüche

1. Vakuumgerät (200) mit mehreren Modulen (210),
wobei jedes der Module (210) umfasst:
eine Funktionseinheit (130), die eine vorgegebene Funktion während des Betriebs des Vakuumgeräts (200) ausführt, und
zumindest eine Kommunikationseinheit (120), die ausgebildet ist, um einen Eingangsdatensatz (310) von einem anderen Modul (210) zu empfangen und an die Funktionseinheit (130) zu übertragen sowie einen Ausgangsdatensatz (320) von der Funktionseinheit (130) zu empfangen und an ein anderes Modul (210) zu übertragen,
wobei mindestens eines der Module (210) zwei Kommunikationseinheiten (120) aufweist, die ausgebildet sind, um den Eingangsdatensatz (310) an die jeweils andere Kommunikationseinheit (120) desselben Moduls (210) zu übertragen, und
wobei jedes Modul (210) höchstens eine galvanische Trennung (150) bei der Verbindung mit anderen Modulen (210) aufweist.

2. Vakuumgerät (200) nach Anspruch 1, wobei
die Module (210) des Vakuumgeräts (200) linear aufeinanderfolgend auf einem logischen Bus angeordnet sind.

3. Vakuumgerät (200) nach einem der Ansprüche 1 oder 2, wobei
jedes der Module (210) zwei Kommunikationseinheiten (120) aufweist, die jeweils mit einer Kommunikationseinheit (120) eines anderen Moduls (210) in Verbindung stehen.

4. Vakuumgerät (200) nach einem der Ansprüche 1 oder 2, wobei
mindestens zwei Module (210) des Vakuumgeräts (200) nur eine einzige Kommunikationseinheit (120) aufweisen.

5. Vakuumgerät (200) nach einem der Ansprüche 1 bis 4, wobei
die zwei Kommunikationseinheiten (120) des mindestens einen Moduls (210), das zwei Kommunikationseinheiten (120) aufweist, jeweils mit einer Kommunikationseinheit (120) zweier voneinander verschiedener anderer Module (210) in Verbindung stehen.

6. Vakuumgerät (200) nach einem der Ansprüche 1 bis 5, wobei
die zumindest eine Kommunikationseinheit (120) jedes der Module (210) nur mit einer einzigen Kommunikationseinheit (120) eines anderen Moduls (210) des Vakuumgeräts (200) in Verbindung steht.

7. Vakuumgerät (200) nach einem der Ansprüche 1 bis 6, wobei
die Kommunikationseinheit (120) überprüft, ob der Eingangsdatensatz (310) an die Funktionseinheit (130) des jeweiligen Moduls (210) adressiert ist, und den Eingangsdatensatz (310) nur dann an die Funktionseinheit (130) überträgt, wenn der Eingangsdatensatz (310) an die Funktionseinheit (130) des jeweiligen Moduls (210) adressiert ist.

8. Vakuumgerät (200) nach einem der Ansprüche 1 bis 7, wobei
die Funktionseinheit (130) ausgebildet ist, um den Ausgangsdatensatz (320) an alle Kommunikationseinheiten (120) des Moduls (210) zu übertragen.

9. Vakuumgerät (200) nach Anspruch 8, wobei
die Kommunikationseinheiten (120) der Module (210) des Vakuumgeräts (200) derart miteinander verbunden sind, dass der Eingangsdatensatz (310) und der Ausgangsdatensatz (320) zu allen Modulen (210) des Vakuumgeräts (200) übertragbar sind.

10. Vakuumgerät (200) nach einem der Ansprüche 1 bis 9, wobei
zumindest zwei Verbindungen zwischen den Kommunikationseinheiten (120) der Module (210) des Vakuumgeräts (200) unterschiedliche Übertragungsparameter aufweisen.

11. Vakuumgerät (200) nach einem der Ansprüche 1 bis 10, wobei
die Kommunikationseinheit (120) als CAN-Controller ausgebildet ist.

12. Vakuumgerät (200) nach einem der Ansprüche 1 bis 11, wobei
eines der Module (210) des Vakuumgeräts (200) als zentrale Logikeinheit (215) ausgebildet ist, die den Eingangsdatensatz (310) generiert, und
die Kommunikationsverbindungen zwischen der zentralen Logikeinheit (215) und den anderen Modulen (210, 216, 217, 218) ausgebildet sind, um den Eingangsdatensatzes zu allen Modulen (210) des Vakuumgeräts (200) zu übertragen.

13. Vakuumgerät (200) nach Anspruch 12, wobei
die zentralen Logikeinheit (215) nur eine Anschlussverbindung (160) zu einem weiteren Modul (210) aufweist.

14. Vakuumgerät (200) nach einem der Ansprüche 1 bis 13, wobei
ein Zubehörelement mit zumindest einer Kommunikationseinheit (120) eines der Module (210) des Vakuumgeräts (200) verbindbar ist.

## Claims

1. A vacuum device (200) comprising a plurality of modules (210),
wherein each of the modules (210) comprises:
a functional unit (130) which performs a predefined function during the operation of the vacuum device (200), and
at least one communication unit (120) which is configured to receive an input data set (310) from another module (210) and to transmit it to the functional unit (130) and to receive an output data set (320) from the functional unit (130) and to transmit it to another module (210),
wherein at least one of the modules (210) has two communication units (120) which are configured to transmit the input data set (310) to the respective other communication unit (120) of the same module (210), and
wherein each module (210) has at most one galvanic isolation (150) when connected to other modules (210).

2. A vacuum device (200) according to claim 1, wherein
the modules (210) of the vacuum device (200) are arranged linearly following one another on a logical bus.

3. A vacuum device (200) according to one of the claims 1 or 2, wherein
each of the modules (210) has two communication units (120) which are each connected to a communication unit (120) of another module (210).

4. A vacuum device (200) according to one of the claims 1 or 2, wherein
at least two modules (210) of the vacuum device (200) have only a single communication unit (120).

5. A vacuum device (200) according to any one of the claims 1 to 4, wherein the two communication units (120) of the at least one module (210), which has two communication units (120), are each connected to a communication unit (120) of two other modules (210) which are different from one another.

6. A vacuum device (200) according to any one of the claims 1 to 5, wherein the at least one communication unit (120) of each of the modules (210) is only connected to a single communication unit (120) of another module (210) of the vacuum device (200).

7. A vacuum device (200) according to any one of the claims 1 to 6, wherein the communication unit (120) checks whether the input data set (310) is addressed to the functional unit (130) of the respective module (210) and only transmits the input data set (310) to the functional unit (130) if the input data set (310) is addressed to the functional unit (130) of the respective module (210).

8. A vacuum device (200) according to any one of the claims 1 to 7, wherein the functional unit (130) is configured to transmit the output data set (320) to all the communication units (120) of the module (210).

9. A vacuum device (200) according to claim 8, wherein
the communication units (120) of the modules (210) of the vacuum device (200) are connected to one another such that the input data set (310) and the output data set (320) can be transmitted to all the modules (210) of the vacuum device (200).

10. A vacuum device (200) according to any one of the claims 1 to 9, wherein at least two connections between the communication units (120) of the modules (210) of the vacuum device (200) have different transmission parameters.

11. A vacuum device (200) according to any one of the claims 1 to 10, wherein the communication unit (120) is configured as a CAN controller.

12. A vacuum device (200) according to any one of the claims 1 to 11, wherein
one of the modules (210) of the vacuum device (200) is configured as a central logic unit (215) which generates the input data set (310), and
the communication links between the central logic unit (215) and the other modules (210, 216, 217, 218) are configured to transmit the input data set to all the modules (210) of the vacuum device (200).

13. A vacuum device (200) according to claim 12, wherein
the central logic unit (215) has only one connection link (160) to a further module (210).

14. A vacuum device (200) according to any one of the claims 1 to 13, wherein an accessory element can be connected to at least one communication unit (120) of one of the modules (210) of the vacuum device (200).

## Revendications

1. Appareil à vide (200) comprenant plusieurs modules (210),
chacun des modules (210) comprenant :
une unité fonctionnelle (130) qui exécute une fonction prédéterminée pendant le fonctionnement de l'appareil à vide (200), et
au moins une unité de communication (120) conçue pour recevoir un ensemble de données d'entrée (310) d'un autre module (210) et le transmettre à l'unité fonctionnelle (130), et pour recevoir un ensemble de données de sortie (320) de l'unité fonctionnelle (130) et le transmettre à un autre module (210),
dans lequel
l'un au moins des modules (210) comprend deux unités de communication (120) conçues pour transmettre l'ensemble de données d'entrée (310) à l'autre unité de communication (120) respective du même module (210), et chaque module (210) présente tout au plus une isolation galvanique (150) dans la liaison avec d'autres modules (210).

2. Appareil à vide (200) selon la revendication 1,
dans lequel
les modules (210) de l'appareil à vide (200) sont disposés linéairement les uns à la suite des autres sur un bus logique.

3. Appareil à vide (200) selon l'une des revendications 1 ou 2,
dans lequel
chacun des modules (210) comprend deux unités de communication (120) communiquant chacune avec une unité de communication (120) d'un autre module (210).

4. Appareil à vide (200) selon l'une des revendications 1 ou 2,
dans lequel
au moins deux modules (210) de l'appareil à vide (200) ne comprennent qu'une seule unité de communication (120).

5. Appareil à vide (200) selon l'une des revendications 1 à 4,
dans lequel
les deux unités de communication (120) dudit au moins un module (210) comprenant deux unités de communication (120) communiquent chacune avec une unité de communication (120) de deux autres modules (210) différents l'un de l'autre.

6. Appareil à vide (200) selon l'une des revendications 1 à 5,
dans lequel
ladite au moins une unité de communication (120) de chacun des modules (210) ne communique qu'avec une seule unité de communication (120) d'un autre module (210) de l'appareil à vide (200).

7. Appareil à vide (200) selon l'une des revendications 1 à 6,
dans lequel
l'unité de communication (120) vérifie si l'ensemble de données d'entrée (310) est adressé à l'unité fonctionnelle (130) du module (210) respectif, et ne transmet l'ensemble de données d'entrée (310) à l'unité fonctionnelle (130) que si l'ensemble de données d'entrée (310) est adressé à l'unité fonctionnelle (130) du module (210) respectif.

8. Appareil à vide (200) selon l'une des revendications 1 à 7,
dans lequel
l'unité fonctionnelle (130) est conçue pour transmettre l'ensemble de données de sortie (320) à toutes les unités de communication (120) du module (210).

9. Appareil à vide (200) selon la revendication 8,
dans lequel
les unités de communication (120) des modules (210) de l'appareil à vide (200) sont reliées entre elles de telle sorte que l'ensemble de données d'entrée (310) et l'ensemble de données de sortie (320) peuvent être transmis à tous les modules (210) de l'appareil à vide (200).

10. Appareil à vide (200) selon l'une des revendications 1 à 9,
dans lequel
au moins deux liaisons entre les unités de communication (120) des modules (210) de l'appareil à vide (200) présentent des paramètres de transmission différents.

11. Appareil à vide (200) selon l'une des revendications 1 à 10,
dans lequel
l'unité de communication (120) est conçue comme un contrôleur CAN.

12. Appareil à vide (200) selon l'une des revendications 1 à 11,
dans lequel
l'un des modules (210) de l'appareil à vide (200) est conçu comme une unité logique centrale (215) qui génère l'ensemble de données d'entrée (310), et
les liaisons de communication entre l'unité logique centrale (215) et les autres modules (210, 216, 217, 218) sont conçues pour transmettre l'ensemble de données d'entrée à tous les modules (210) de l'appareil à vide (200).

13. Appareil à vide (200) selon la revendication 12,
dans lequel
l'unité logique centrale (215) ne présente qu'une liaison de raccordement (160) à un autre module (210).

14. Appareil à vide (200) selon l'une des revendications 1 à 13,
dans lequel
un accessoire peut être relié à au moins une unité de communication (120) de l'un des modules (210) de l'appareil à vide (200).
